# EUROPÄISCHE PATENTANMELDUNG

(11) **EP 4 810 848 A1**
(43) Veröffentlichungstag der Anmeldung: **23.09.2026**
(21) Anmeldenummer: 26165091.5
(22) Anmeldetag: 16.03.2026
(51) Int. Cl.: F16L 55/165, F16L 55/18

(54) **SYSTEM UND VERFAHREN ZUM SANIEREN EINER ROHRLEITUNG**

(30) Priorität: 17.03.2025 EP 25164132
(71) Anmelder: Pipetronics GmbH & Co. KG, 76297 Stutensee (DE)
(72) Erfinder: Lämmerhirt, Markus, 76133 Karlsruhe (DE); Lämmerhirt, Anton, 76133 Karlsruhe (DE)
(74) Vertreter: Durm Patentanwälte PartG mbB

(57) **Zusammenfassung**

Ein Schlauchliner (20) zum Einziehen in eine schadhafte Rohrleitung (10) hat eine Wandung (21) aus flexiblem, mit Harz getränktem Kunststoffmaterial, das unter UV-Licht aushärtet. An der Außenseite der Wandung (21) sind Messsonden (30) angeordnet, deren Sensoren (33, 34) die Temperatur messen und die Lichtintensität des die Wandung (21) durchdringenden UV-Lichts messen. Eine Kontrolleinheit (70) regelt die Fortbewegung der UV-Lichtquelle (50) in Abhängigkeit von der Temperatur und der Lichtintensität. Dadurch lässt sich eine effektive und ideale Aushärtung des Schlauchliners (20) erzielen.

## Beschreibung

Die Erfindung betrifft ein System und ein Verfahren zum Sanieren einer schadhaften Rohrleitung mittels eines Schlauchliners, der in die Rohrleitung eingezogen wird.

Im Erdreich liegende Abwasserleitungen sind großen Belastungen ausgesetzt. Nach einiger Zeit geben sie nach und werden undicht. Es kommt zu Verschiebungen einzelner Rohrabschnitte, Wurzeleinwüchsen, Bildung von Rissen bis hin zu größeren Rohrbrüchen. Früher gab es zur Behebung solcher Schäden nur die Möglichkeit, die betroffenen Rohre freizulegen und ganz oder abschnittsweise auszutauschen.

Heute üblich ist die Rohrsanierung ohne Aufgraben; die Reparatur der Rohre wird von innen vorgenommen. Eine bewährte Methode zur Sanierung auch von längeren Abschnitten schadhafter Rohrleitungen ist das sogenannte Schlauchliner-Verfahren. Dabei wird ein gefalteter Schlauch aus flexiblem, mit Glasfaser verstärktem Kunststoff mit einem Kunstharz getränkt und in das alte schadhafte Rohr eingezogen. Sodann wird der Schlauch mittels Druckluft entfaltet und an die Innenwandung des Rohrs gepresst. Schließlich wird das Kunststoffmaterial mit ultraviolettem Licht (UV-Licht) bestrahlt, wodurch dieses aushärtet. Auf diese Weise entsteht ein nahtloses neues Innenrohr konzentrisch im Altrohr.

Das Schlauchliner-Verfahren kann bei Rohrleitungen mit einem Durchmesser zwischen 50 cm und 2 m angewendet werden. Die Einbaulänge kann dabei bis zu 200 m an einem Stück betragen.

Früher wurde ausschließlich mit dem Verfahren der Härtung durch Wärme gearbeitet. Durchgesetzt hat sich heute die Aushärtung des Schlauchliners mittels Bestrahlung mit UV-Licht, was vor allem den Vorteil einer höheren Geschwindigkeit hat. Hohe Prozesssicherheit, geringer Energieeinsatz und minimale Emissionen von Lärm und Geruch sind weitere Vorteile der Lichthärtung.

Um den eingesetzten Schlauchliner auf seiner gesamten Länge auszuhärten, wird eine UV-Lichtquelle, die aus mehreren hintereinander angeordneten UV-Leuchten bestehen kann, durch die Rohrleitung bewegt. Dabei darf die Geschwindigkeit, mit der die UV-Lichtquelle fortbewegt wird, nur so groß sein, dass an jeder Stelle des Schlauchliners eine ausreichende Härtung, d. h. Polymerisation des Kunststoffmaterials gewährleistet ist. Die Geschwindigkeit darf aber auch nicht zu klein sein, was zur Ausbildung von zu langen Molekülketten und damit negativem Einfluss auf die Qualität des Schlauchliners führen würde.

Es stellt sich also das Problem der Regelung, Überwachung und Kontrolle der UV-Härtung, damit die Stabilität und Haltbarkeit des sanierten Rohrs sichergestellt und garantiert werden können.

Eine Möglichkeit ist eine optische Kontrolle mittels einer Kamera, die mit der UV-Quelle mitfährt und/oder nach Beendigung der Lichthärtung separat durch das sanierte Rohr gefahren wird. Der Nachteil einer solchen rein optischen Kontrolle besteht darin, dass für die Kamera nur die zur Rohrmitte weisende Innenwandung sichtbar ist. Ob die Wandung des Schlauchliners bis zu dessen Außenseite vollständig durchgehärtet ist, bleibt für die Kamera buchstäblich im Dunkeln.

DE 198 17 413 A1 offenbart ein Verfahren zur Regelung der Geschwindigkeit der Aushärtung des Schlauchliners mittels einer oder mehrerer durch das Rohr geführten UV-Lichtquellen. Die Steuerung der Geschwindigkeit, mit der die UV-Lichtquelle fortbewegt wird, erfolgt dabei in Abhängigkeit von der durch die exotherme Härtungsreaktion erzeugten Temperatur an der inneren Oberfläche des Schlauchs. Besonders bei Schlauchlinern mit größerem Durchmesser oder mit einer dicken Wandung hat die Temperaturmessung auf der Innenseite den Nachteil, dass nur indirekt auf die Durchhärtung bis zur Außenseite des Schlauchliners bzw. Innenseite des zu sanierenden Rohrs geschlossen werden kann.

EP 3 389 991 B1 schlägt vor, die Erfassung von Messwerten, die repräsentativ für den Zustand der Aushärtung sind, von der Innenseite an die Außenseite der aushärtbaren Schlauchliner-Wandung zu verlagern. Durch die Anordnung einer Messeinrichtung an der Außenseite der härtbaren Wandung kann zuverlässig festgestellt werden, dass der Schlauchliner bis zu seiner Außenseite durchgehärtet ist. Die Messeinrichtung kann dabei ausgelegt und eingerichtet sein, um eine Temperatur, eine Dielektrizitätskonstante, eine Farbe und/oder einen Zustand zu messen. Die Messeinrichtung umfasst einen RFID-Transponder, um die Messwerte drahtlos an eine Steuerungs- oder Regelungseinrichtung zu übertragen. Diese Regelungseinrichtung regelt die Fortbewegung der Aushärtvorrichtung in dem Schlauchliner und/oder die Leistungsabgabe der UV-Strahlungsquelle in Abhängigkeit der erfassten Messwerte automatisch.

Die vorbekannten Systeme und Verfahren zum Sanieren einer schadhaften Rohrleitung sind allerdings verbesserungswürdig, insbesondere was die effektive und vor allem optimale Aushärtung des eingezogenen Schlauchliners betrifft.

Die Lösung des technischen Problems beruht auf der Erkenntnis, dass die Lichtdurchlässigkeit (Transluzenz) für ultraviolettes Licht eine wichtige Eigenschaft darstellt, um die Aushärtung des Schlauchliners festzustellen und zu kontrollieren, insbesondere wenn dies in Kombination mit einer Temperaturmessung erfolgt.

Die Aufgabe wird somit gelöst durch ein System mit den im ersten Patentanspruch angegebenen Merkmalen.

Erfindungsgemäß hat die an der Außenseite der Wandung des eingezogenen Schlauchliners befestigte Messsonde einen ersten Sensor zum Messen der Temperatur und einen zweiten Sensor, der die Lichtintensität des die Wandung durchdringenden UV-Lichts und damit die partielle Lichtdurchlässigkeit (Transluzenz) des aushärtenden Kunststoffmaterials erfasst. Beide Messsignale werden an eine entfernte Kontrolleinheit gesendet. Die Kontrolleinheit ist dazu ausgebildet, die Fortbewegung der UV-Lichtquelle entlang der Achse des Schlauchliners in Abhängigkeit von der Temperatur und der Lichtintensität zu regeln. Liegen sowohl die gemessene Temperatur als auch die erfasste Lichtintensität innerhalb vorgegebener Grenzen, ist die Polymerisation des Kunststoffmaterials optimal und haben die Kunststoffmoleküle eine ideale Kettenlänge.

Bevorzugt ist die Kontrolleinheit dazu ausgebildet, die Geschwindigkeit der Fortbewegung der UV-Lichtquelle derart zu regeln, dass die von der Messsonde erfassten Maxima der Temperatur und der Lichtintensität an der Messsonde gleichzeitig erreicht werden, somit also die exotherme Reaktion und die Lichtdurchlässigkeit zeitgleich (parallel) auf dem Maximum sind. Liegt die Geschwindigkeit, mit der die UV-Lichtquelle fortbewegt wird, zu niedrig, ist die Polymerisation schon ganz oder teilweise abgeschlossen, bevor die maximale Lichtintensität an der Messsonde erreicht ist; dies hat negativen Einfluss auf die Kettenlänge der Moleküle. Ist dagegen die Geschwindigkeit zu hoch, ist die Lichtintensität schon maximal, bevor die Polymerisation abgeschlossen ist; dies würde zu einer nicht ausreichenden Durchhärtung führen.

Zweckmäßig ist in die Messsonde ein Funksender integriert, der die Messsignale drahtlos an einen entfernten Funkempfänger überträgt. Dabei ist es von Vorteil, wenn die UV-Lichtquelle und der Funkempfänger auf einer gemeinsamen Transportvorrichtung im Inneren des Schlauchliners angeordnet sind. Da Funkwellen das Kunststoffmaterial des Schlauchliners leicht durchdringen und der zu überbrückende Abstand zwischen Funksender und Funkempfänger minimal ist, genügt eine schwache Sendeleistung. Entsprechend klein kann die Energieversorgung der Messsonde ausgebildet sein; eine kleine Lithium-Batterie reicht aus.

Die Aushärtung des Kunststoffmaterials soll möglichst über die gesamte Länge des Schlauchliners erfasst werden. Bevorzugt ist deshalb eine Vielzahl von Messsonden mit Abstand voneinander entlang der Achse des eingezogenen Schlauchliners angeordnet. Dabei sind die Abstände zwischen den einzelnen Messsonden so gewählt, dass die Messstellen ausreichend dicht hintereinander angeordnet sind, um die Aushärtung über die gesamte axiale Länge des Schlauchliners mit hinreichender Sicherheit feststellen zu können.

Die Kontrolleinheit kann neben einer Überwachungseinheit zum Überwachen der vollständigen Aushärtung optional eine Validierungseinheit zum Verfolgen und Aufzeichnen der Aushärtung umfassen. Damit ist es möglich, ein Protokoll der Aushärtung zu erhalten, was hinsichtlich der hohen Anforderungen an die Sicherheit und Dauerhaftigkeit der Sanierung von großer Bedeutung ist. Im Vergleich zu einer rein optischen Kontrolle des Schlauchliners nach Abschluss der Aushärtung hat die messtechnische Erfassung und Speicherung des gesamten Verlaufs der Aushärtung eine wesentlich höhere Aussagekraft.

Die Aufgabe wird auch gelöst durch ein Verfahren mit den im Anspruch 8 angegebenen Verfahrensschritten.

Zunächst wird der mit einer oder mehreren erfindungsgemäßen Messsonden ausgerüstete Schlauchliner in die schadhafte Rohrleitung eingezogen.

Anschließend wird die UV-Lichtquelle entlang der Achse des eingezogenen Schlauchliners durch die Rohrleitung bewegt, um das Kunststoffmaterial des Schlauchliners auszuhärten. Dabei wird die Temperatur sowie die Lichtintensität an der Außenseite des Schlauchliners gemessen. Die Fortbewegung der UV-Lichtquelle wird in Abhängigkeit der Temperatur und der Lichtintensität geregelt. Dadurch wird jede Stelle des Schlauchliners genau solange mit UV-Licht bestrahlt, bis die Temperatur und die Transluzenz des Kunststoffmaterials jeweils einen vorgegebenen optimalen Wert erreicht haben.

Bevorzugt wird die Geschwindigkeit der Fortbewegung der UV-Lichtquelle so geregelt, dass das Maximum der Temperatur und das Maximum der Lichtintensität gleichzeitig erreicht werden. Dadurch erfolgt die Polymerisation mit idealer Kettenlänge der Kunststoffmoleküle. Ist nämlich die Geschwindigkeit, mit der die UV-Lichtquelle fortbewegt wird, zu niedrig, ist die Polymerisation schon zu weit fortgeschritten, bevor die gemessene Lichtintensität - und damit die Transluzenz des Kunststoffmaterials - das vorgegebene Maximum erreicht hat, was sich negativ auf die Kettenlänge der Moleküle auswirkt. Ist die Geschwindigkeit der Fortbewegung dagegen zu hoch, erreicht die gemessene Lichtintensität (Transluzenz) ihr Maximum schon vor dem Maximum der gemessenen Temperatur, was bedeutet, dass das Harz noch nicht ausreichend polymerisiert ist. Liegen die Maxima von Temperatur und Lichtintensität übereinander, ist die Geschwindigkeit der UV-Lichtquelle optimal, sodass die Aushärtung des Schlauchliners über seine gesamte Länge optimal durchgeführt wird.

Vorteilhafterweise wird die vollständige optimale Aushärtung des Schlauchliners kontinuierlich, d. h. über die gesamte Länge des Schlauchliners, überwacht. Wird überdies der Verlauf der Aushärtung aufgezeichnet, ist es möglich, ein lückenloses Protokoll der Aushärtung zu erhalten.

Ein Ausführungsbeispiel der Erfindung wird nachstehend unter Bezugnahme auf die beigefügten Abbildungen erläutert. Es zeigen:
- Figur 1: eine Rohrleitung mit eingezogenem Schlauchliner, der an seiner Außenseite Messsonden trägt, perspektivisch;
- Figur 2a: eine Messsonde des Schlauchliners von Figur 1, von links;
- Figur 2b: die Messsonde, von rechts;
- Figur 3: ein System zum Sanieren einer schadhaften Rohrleitung, schematisch;
- Figur 4: das System von Figur 3, in einem Prinzipbild;
- Figur 5: den Verlauf von Temperatur und Lichtintensität beim Aushärten des Schlauchliners.

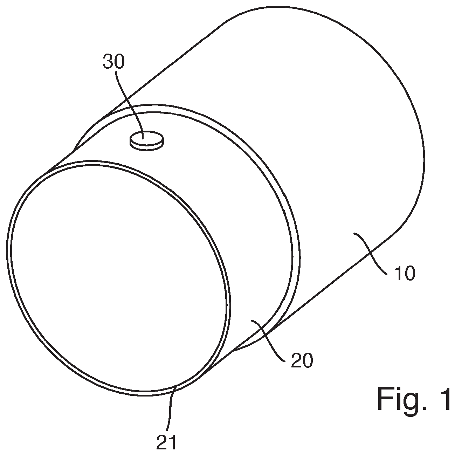

In Figur 1 ist ein kurzer Abschnitt einer schadhaften Rohrleitung 10 zu sehen. Zur Reparatur wurde ein Schlauchliner 20 in die Rohrleitung 10 eingezogen und mittels Druckluft an die Innenseite der Rohrleitung 10 gepresst. Der Schlauchliner 20 hat eine Wandung 21 aus flexiblem glasfaserverstärktem Kunststoff, der mit Harz getränkt ist, das unter UV-Licht aushärtet.

An der Außenseite der Wandung 21 des Schlauchliners 20 sitzen Messsonden 30, von denen hier beispielhaft nur eine einzige dargestellt ist. Viele gleiche Messsonden 30 sind mit regelmäßigem Abstand voneinander entlang der Achse des eingezogenen Schlauchliners 20 angeordnet. Die Messsonden 30 haften an dem noch ungehärteten klebrigen Kunststoffmaterial des Schlauchliners 20 an.

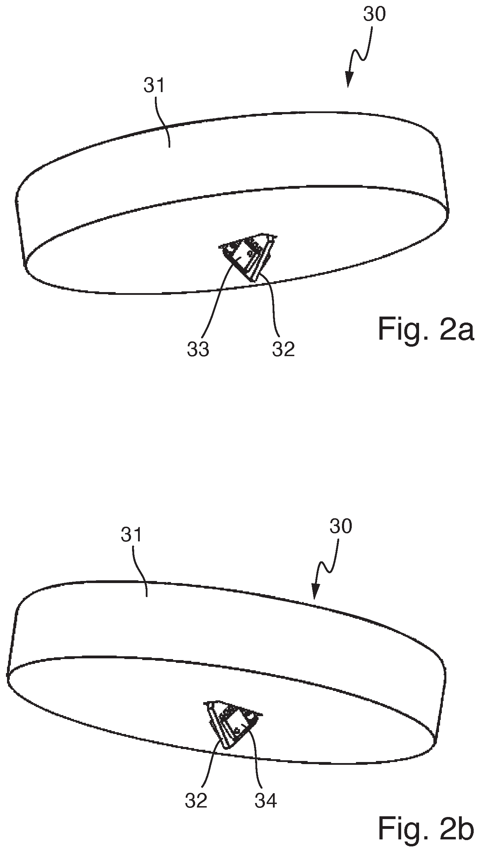

Wie in den Figuren 2a und 2b zu sehen, hat die Messsonde 30 ein flaches rechteckiges Gehäuse 31 und eine daran angeformte Messspitze 32, die rechtwinklig vom Gehäuse 31 nach unten absteht, sodass sie ähnlich wie ein Spieß ein Stück weit in die Wandung 21 des Schlauchliners 20 einsteckbar ist. An der Messspitze 32 ist ein erster Sensor 33 zum Messen der Temperatur angeordnet sowie ein zweiter Sensor 34, der die Lichtintensität misst.

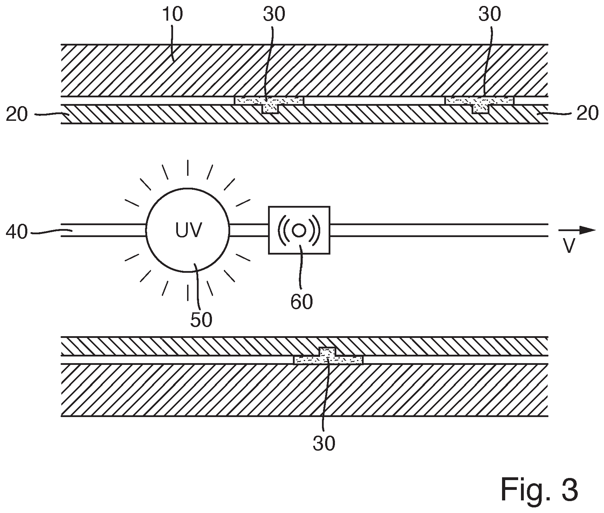

Gemäß Figur 3 umfasst das System zum Sanieren der schadhaften Rohrleitung 10 den Schlauchliner 20 mit Messsonden 30 sowie eine Transportvorrichtung 40, die in Richtung des Pfeils V durch die Rohrleitung 10 bzw. den Schlauchliner 20 gefahren wird. Die Transportvorrichtung 40 kann beispielsweise ein Seil oder ein selbstfahrender Sanierungsroboter sein. Auf der Transportvorrichtung 40 ist eine UV-Lichtquelle 50 angeordnet, welche entlang der Achse des Schlauchliners 20 gefahren wird. Anstelle einer einzigen UV-Lichtquelle 50 können auch mehrere hintereinander angeordnete UV-Lichtquellen vorgesehen sein.

In dem zu sehenden Abschnitt der Rohrleitung 10 sind drei Messonden 30 zu sehen, an denen die UV-Lichtquelle 50 vorbeifährt. Die axialen Abstände der Messsonden 30 sind hier stark verkürzt dargestellt.

Die Bestrahlung mit ultraviolettem Licht führt zu einer exothermen Reaktion im Kunststoffmaterial des Schlauchliners 20 und in der Folge zu einer Aushärtung. Dabei dienen die Messsonden 30 zur Überwachung des Grads der Aushärtung. Gemessen wird nicht nur die Temperatur an der Außenseite der Wandung 20, sondern auch die Intensität des die Wandung 21 durchdringenden UV-Lichts. Hat das Kunststoffmaterial am Anfang eine relativ hohe Lichtdurchlässigkeit (Transluzenz), so geht diese mit fortschreitender Aushärtung stark zurück. Neben der Temperatur ist deshalb auch die Durchlässigkeit für UV-Licht ein Maß für den Aushärtungsgrad. Es hat sich gezeigt, dass die Aushärtung ideal ist, wenn das Maximum der Temperatur und das Maximum der Lichtintensität gleichzeitig erreicht werden, also zusammenfallen.

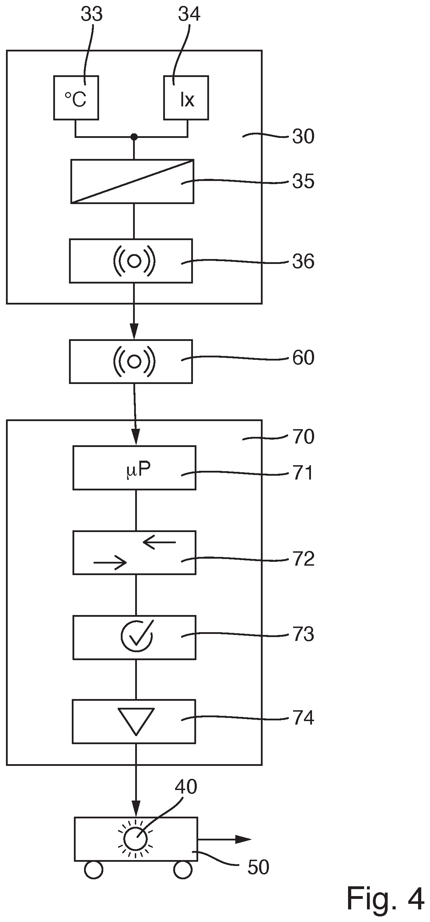

Wie sich aus dem Prinzipbild von Figur 4 ergibt, enthalten die Messsonden 30 einen Signalwandler 35 zur Erzeugung von Messsignalen, welche die gemessenen Werte für Temperatur und Lichtintensität repräsentieren. Die Messsonden 30 enthalten ferner einen Funksender 36 zur drahtlosen Übertragung der Messsignale an einen Funkempfänger 60. Dieser Funkempfänger 60 sitzt auf der Transportvorrichtung 40 und bewegt sich mit der UV-Lichtquelle 50 gemeinsam durch die Rohrleitung 10 mit dem auszuhärtenden Schlauchliner 20.

Wie sich aus dem Prinzipbild von Figur 4 weiter ergibt, wird das vom Funkempfänger 60 empfangene Messsignal an eine Kontrolleinheit 70 weitergegeben. Diese Kontrolleinheit 70 kann, muss aber nicht, ebenfalls auf der Transportvorrichtung 40 angeordnet sein, also mit der UV-Lichtquelle 50 mitfahren.

Die Kontrolleinheit 70 umfasst eine Verarbeitungseinheit 71 in Form eines Mikroprozessors, welcher die Messsignale der Sensoren 33, 34 empfängt, verarbeitet und ein Steuersignal erzeugt, das die Geschwindigkeit der Fortbewegung der Transportvorrichtung 40 mit der UV-Lichtquelle 50 derart regelt, dass die von der gerade passierten Messsonde 30 erfassten Maxima der Temperatur und der Lichtintensität gleichzeitig erreicht werden. Ergebnis ist eine effektive und optimale Aushärtung des Schlauchliners 20.

Die Kontrolleinheit 70 umfasst ferner eine Überwachungseinheit 72, welche dazu ausgebildet ist, den Prozess der Aushärtung zu überwachen, beispielsweise durch einen Vergleich der idealen Überlagerung der Maxima von Temperatur und Lichtintensität mit den tatsächlich erzielten Abweichungen. Entspricht der Grad der Aushärtung den vorgegebenen Parametern, wird dieser in einer Validierungseinheit 73 abgespeichert. Auf diese Weise werden nicht nur das Ergebnis, sondern auch der Verlauf der Aushärtung lückenlos überwacht und protokolliert.

Eine Ausgangsschnittstelle 74 ist dazu ausgebildet, den Antrieb der Transportvorrichtung 50 anzusteuern.

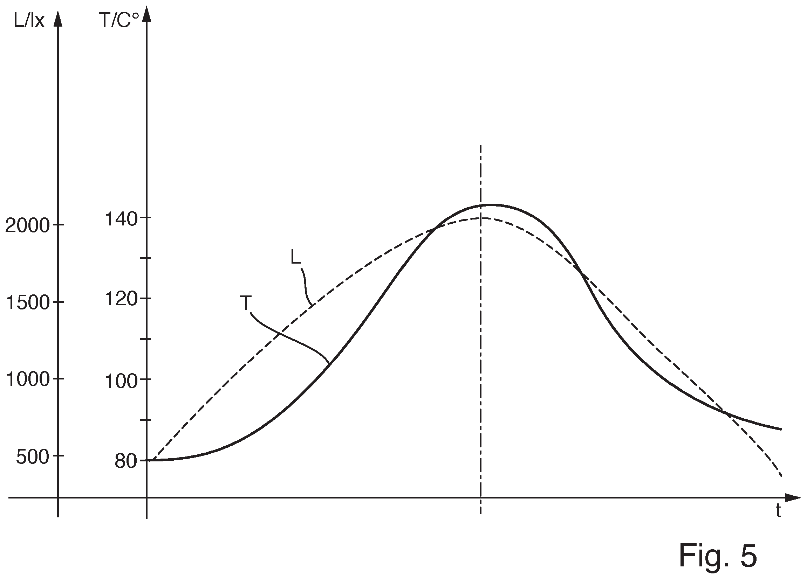

Das Diagramm von Figur 5 erläutert den zeitlichen Verlauf von Temperatur T und Lichtintensität L beim Vorbeifahren der UV-Lichtquelle 50 an einer der Messsonden 30.

Es fällt auf, dass bei der Annäherung der UV-Lichtquelle 50 die vom Sensor 34 der Messsonde 30 gemessene Lichtintensität L wesentlich schneller ansteigt als die vom Sensor 33 gemessene Temperatur T. Die Maxima von Lichtintensität L und Temperatur T liegen hier fast exakt übereinander, was bedeutet, dass die Geschwindigkeit, mit der die UV-Lichtquelle 50 an dieser Messsonde 30 vorbeifährt, nahezu ideal ist, um eine optimale Aushärtung zu erreichen. Bei höherer oder niedriger Geschwindigkeit der Fortbewegung würden sich die beiden Maxima gegeneinander verschieben.

### Bezugszeichen

- 10: Rohrleitung
- 20: Schlauchliner
- 21: Wandung

- 30: Messsonde
- 31: Gehäuse
- 32: Messspitze
- 33: Sensor (Temperatur)
- 34: Sensor (Lichtintensität)
- 35: Signalwandler
- 36: Funksender

- 40: Transportvorrichtung

- 50: UV-Lichtquelle

- 60: Funkempfänger

- 70: Kontrolleinheit
- 71: Verarbeitungseinheit
- 72: Überwachungseinheit
- 73: Validierungseinheit
- 74: Ausgangsschnittstelle

## Patentansprüche

1. System zum Sanieren einer schadhaften Rohrleitung, mit
einem Schlauchliner (20), der in die Rohrleitung (10) eingezogen ist und eine Wandung (21) aus flexiblem, unter UV-Licht aushärtendem Kunststoffmaterial hat;
eine UV-Lichtquelle (50), die durch die Rohrleitung (10) bewegbar ist; einer an der Außenseite der Wandung (21) befestigten Messsonde (30) mit einem ersten Sensor (33) zum Messen der Temperatur und mit einem zweiten Sensor (34) zum Erfassen der Lichtintensität des die Wandung (21) durchdringenden UV-Lichts; und
einer Kontrolleinheit (70), die dazu ausgebildet ist, die Fortbewegung der UV-Lichtquelle (50) in Abhängigkeit der Temperatur und der Lichtintensität zu regeln.

2. System nach Anspruch 1, wobei die Kontrolleinheit (70) dazu ausgebildet ist, die Geschwindigkeit der Fortbewegung der UV-Lichtquelle (50) so zu regeln, dass die Temperatur und die Lichtintensität gleichzeitig ihr Maximum erreichen.

3. System nach einem der vorhergehenden Ansprüche, wobei die Messsonde (30) einen Funksender (36) zur drahtlosen Übertragung von Messsignalen, welche die Temperatur und die Lichtintensität repräsentieren, an die Kontrolleinheit (70) umfasst.

4. System nach einem der vorhergehenden Ansprüche, wobei eine Vielzahl von Messsonden (30) mit Abstand voneinander entlang der Achse des eingezogenen Schlauchliners (20) angeordnet sind.

5. System nach einem der vorhergehenden Ansprüche, wobei die Kontrolleinheit (70) eine Verarbeitungseinheit (71) umfasst, welche dazu ausgebildet ist, die Verläufe von Temperatur und Lichtintensität zu verfolgen, die jeweiligen Maxima übereinanderzulegen und daraus die Geschwindigkeit der Fortbewegung der UV-Lichtquelle (50) zu ermitteln.

6. System nach Anspruch 5, wobei die Kontrolleinheit (70) eine Überwachungseinheit (72) umfasst, welche dazu ausgebildet ist, die optimale und vollständige Aushärtung des Schlauchliners (20) zu überwachen.

7. System nach Anspruch 6, wobei die Kontrolleinheit (70) eine Validierungseinheit (73) umfasst, welche dazu ausgebildet ist, den Verlauf der Aushärtung des Schlauchliners (20) aufzuzeichnen.

8. Verfahren zum Sanieren einer schadhaften Rohrleitung (10), mit den Schritten:
Bereitstellen eines Systems nach einem der Ansprüche 1 bis 7;
Einziehen des Schlauchliners (20) in die Rohrleitung (10);
Bewegen der UV-Lichtquelle (50) durch die Rohrleitung (10) mit eingezogenem Schlauchliner (20);
Regeln der Geschwindigkeit der Fortbewegung der UV-Lichtquelle (50) in Abhängigkeit der von der Messsonde (30) gemessenen Temperatur und der erfassten Lichtintensität.

9. Verfahren nach Anspruch 8, wobei die Geschwindigkeit der Fortbewegung der UV-Lichtquelle (50) so geregelt wird, dass das Maximum der Temperatur und das Maximum der Lichtintensität gleichzeitig erreicht werden.

10. Verfahren nach einem der vorhergehenden Ansprüche, mit dem weiteren Schritt:
Überwachen der optimalen und vollständigen Aushärtung des Schlauchliners (20).

11. Verfahren nach einem der vorhergehenden Ansprüche, mit dem weiteren Schritt:
Aufzeichnen des Verlaufs der Aushärtung des Schlauchliners (20).
